# EUROPEAN PATENT SPECIFICATION

(11) **EP 2 065 257 B1**
(45) Date of publication and mention of the grant of the patent: **14.07.2010**
(21) Application number: 08275080.3
(22) Date of filing: 27.11.2008
(51) Int. Cl.: B60R 9/045

(54) **A roof bar for a motor vehicle**
Dachstrebe für ein Kraftfahrzeug
Barre de toit pour véhicule à moteur

(30) Priority: 27.11.2007 GB 0723198
(43) Date of publication of application: 03.06.2009
(73) Proprietor: Ford Global Technologies, LLC, Dearborn, MI 48126 (US)
(72) Inventor: Gerhardt, Torsten, London N22 7UL (GB); Harding, John, Leigh-on-Sea Essex, SS9 1NG (GB); Flemming, Stephen David, Hockley Essex, SS5 4SE (GB); Stanesby, Danny Edward, Benfleet Essex, SS7 3TF (GB); Agius, Alicia, Bournemouth, BH11 9UB (GB); Farrelly, William, Chelmsford Essex, CM2 6HB (GB)
(74) Representative: Grunfeld, David Peter

(56) References cited:
- FR-A- 2 828 854
- GB-A- 450 002
- US-A- 5 096 106
- US-A1- 2007 075 108

## Description

This invention relates to a motor vehicle and in particular to a roof bar for carrying a load on a roof of the motor vehicle.

It is known to provide a motor vehicle with two or more removable roof bars in order to carry objects on the roof of a motor vehicle such as, for example, a roof box, a ladder, scaffold poles, scaffold planks and long lengths of timber. It is a problem with a removable roof bar that considerable time and effort is required to fit or remove the roof bar from the vehicle.

It is a further problem that such fixed but removable roof bars greatly increase the height of the vehicle when they are fitted and, as such, removable roof bars are not ideal for use on a light commercial vehicle such as a van where it is desirable to keep the height of the vehicle below the height restrictions commonly imposed at car park entrances when no load is to be carried on the roof.

It is an object of this invention to provide a stowable roof bar for a motor vehicle that is quick and easy to deploy or stow and does not significantly increase the overall height of the vehicle when it is stowed. Such a stowable roof bar for a motor vehicle is described in document US-A1-2007/075108 that also discloses the preamble of claim 1.

According to a first aspect of the invention there is provided a stowable roof bar for a motor vehicle comprising an elongate load carrying member pivotally connected to a roof of the vehicle so as to extend across the vehicle and a latch mechanism to selectively hold the elongate load carrying member in a deployed state in which a crossbar portion of the elongate load carrying member is spaced above the roof of the vehicle **characterised in that** the latch mechanism comprises a first member having two surfaces corresponding to the stowed and deployed positions of the roof bar attached to one of the vehicle roof and the elongate load carrying member and a complimentary surface on the other of the vehicle roof and the elongate load carrying member for engagement with one of the two surfaces so as to secure the roof bar in the first position corresponding to the stowed state of the roof bar and with the other of the two surfaces so as to secure the roof bar in the second position corresponding to the deployed state of the roof bar.

The invention has the advantage that a separate stay or strut is not required to hold the roof bar in its deployed position thereby reducing the weight and cost of the roof bar.

The first member is a polygonal member having an even number of sides attached to one of the vehicle roof and the elongate load carrying member and a complimentary surface on the other of the vehicle roof and the elongate load carrying member for engagement with one or more of the sides so as to secure the roof bar in at least a first position corresponding to the stowed state of the roof bar and a second position corresponding to a deployed state of the roof bar.

The polygonal member may be attached to one of a bracket on the vehicle roof and the elongate load carrying member and the complimentary surface is one surface of a polygonal aperture formed in one of the elongate load carrying member and the bracket wherein the polygonal aperture is engageable with the polygonal member in at least a first position corresponding to the stowed state of the roof bar and a second position corresponding to a deployed state of the roof bar.

The polygonal member may be a peg extending from the bracket and the elongate load carrying member has the complimentary polygonal aperture formed therein.

The elongate load carrying member may comprise a crossbar portion which extends across the motor vehicle and two end portions, one at each end of the crossbar portion, and the aperture is formed in at least one of the two end portions.

The elongate load carrying member may be H-shaped.

Advantageously, the crossbar portion may be asymmetrical in cross-section having a thickness that is considerably less than the width of the crossbar portion so as to minimise the increase in vehicle height when the roof bar is stowed while retaining a high resistance to bending when a load is carried on the roof bar in the deployed position.

The thickness of the elongate load carrying member may be such that, when the latch mechanism is released so as to permit the roof bar to be moved to a stowed state in which the elongate load carrying member is folded flat on the roof of the vehicle, the highest point of the stowed roof bar is lower than a high point on the roof of the motor vehicle so that the overall height of the vehicle is not increased.

There may be an aperture in both of the end portions and two pegs are provided one for co-operation with each peg, both of the pegs extending in the same direction away from their respective brackets.

Each peg has a round portion that acts as a guide means during transit between the stowed and deployed states and a polygonal portion for latching the elongate load carrying member in the stowed and deployed positions.

The polygonal aperture may be a square aperture.

The polygonal member may be a square member.

Alternatively, the complimentary surface may be a surface on a clamping member that is engageable with the polygonal member.

The roof of the motor vehicle may have a high point and a low point and the roof bar is fitted so as to be stowable in a open ended transverse channel in the roof of the vehicle and the thickness of the components forming the roof bar may be such that, when the roof bar is moved to a stowed state, no part of the stowed roof bar is located below the low point of the roof and above the high point of the roof.

The roof bar may further include a locking means to hold the latching means in a latched position.

Advantageously, the locking means is releasable from one end of the roof bar.

According to a second aspect of the invention there is provided a motor vehicle having a roof and at least two roof bars constructed in accordance with said first aspect of the invention attached to the roof of the motor vehicle in a spaced apart relationship.

The roof of the motor vehicle may have a high point and a low point corresponding to a height below which a surface is not self draining and a number of transverse open ended channels each sized to accommodate a stowed roof bar, each of the channels having a base surface located no lower than the low point of the roof such that, when each roof bar fitted to the roof of the vehicle is moved to its respective stowed state, no part of the stowed roof bar is located higher than the high point of the roof so that the overall height of the motor vehicle is not increased by the stowed roof bars and no part of each roof bar is located lower than the low point of the roof.

The roof may have a convex central portion bounded on each side by a longitudinally extending drainage ditch and the low point of the roof corresponds to the height of the drainage ditches.

Each of the channels may have a base surface located no lower than the height of the drainage ditches so as to ensure that it is self draining.

The invention will now be described by way of example with reference to the accompanying drawing of which:-
Fig.1 is a side view of a motor vehicle according to the invention;
Fig.2 is rear view of the motor vehicle shown in Fig.1;
Fig.3a is a pictorial schematic view of a roof of the vehicle shown in Figs.1 and 2 showing two transverse open ended channels and a roof bar according to the invention in deployed and stowed states;
Fig.3b is a pictorial view of the right hand side of the roof shown in Fig.3 but with no roof bars in place;
Fig.4a is a scrap transverse cross sectional view of the roof shown in Fig.3b in which the dimensions and curvature have been greatly exaggerated;
Fig.4b is a view similar to that of Fig.4a showing a possible stowage volume for a roof bar according to one aspect of the invention;
Fig.5a is a pictorial view of a left hand end of a roof bar according to the invention showing the roof bar in a stowed state;
Fig.5b is an enlarged view of part of a right hand end of the roof bar shown in Fig.5a;
Fig.6a is a pictorial view of the left hand end of the roof bar shown in Fig.26a showing the roof bar in a partially deployed state;
Fig.6b is an enlarged view of part of a right hand end of the roof bar shown in Fig.6a;
Fig.7 is a pictorial view of the left hand end of the roof bar shown in Figs.5a and 6a showing the roof bar in a deployed state;
Fig.8 is a pictorial representation showing the full roof bar in a deployed position;
Fig.9a is a pictorial view showing part of a locking device for the roof bar;
Fig.9b is a partial cross-section showing more parts of the locking device; and
Fig.9c is a pictorial view of a quarter turn lever for the locking device shown in Figs.9a and 9b.

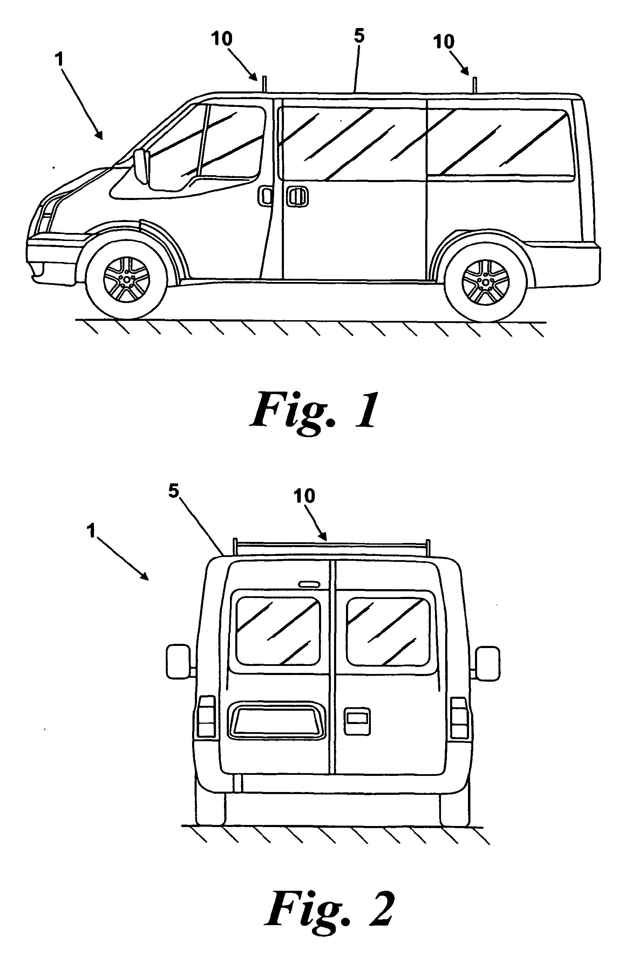

With particular reference to Figs 1 to 4b there is shown a motor vehicle 1 having a roof 5 upon which is mounted two spaced apart identical stowable roof bars 10.

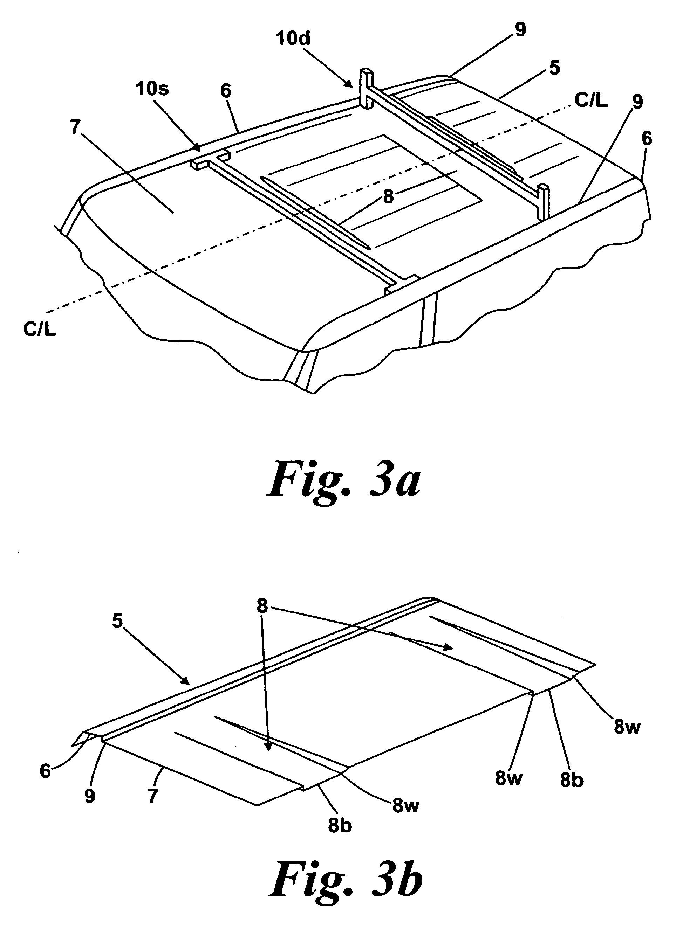

Each of the roof bars 10 is reversibly moveable between a stowed state, indicated by the reference numeral 10s on Fig.3, to a deployed state, indicated by the reference numeral 10d on Fig.3, where it is retainable by a latch mechanism.

In Figs.1 to 3a the motor vehicle is in the form of a van 1 and is shown with two roof bars 10 fitted to its roof 5 but it will be appreciated that more than two roof bars 10 could be fitted to the roof 5.

The roof 5 comprises of a convex central portion 7 bounded on each longitudinal side by a drainage ditch 9, two channels 8 each having sides surfaces 8w and a base surface 8b and a ridge 6 running longitudinally along both outer edges of the roof 5.

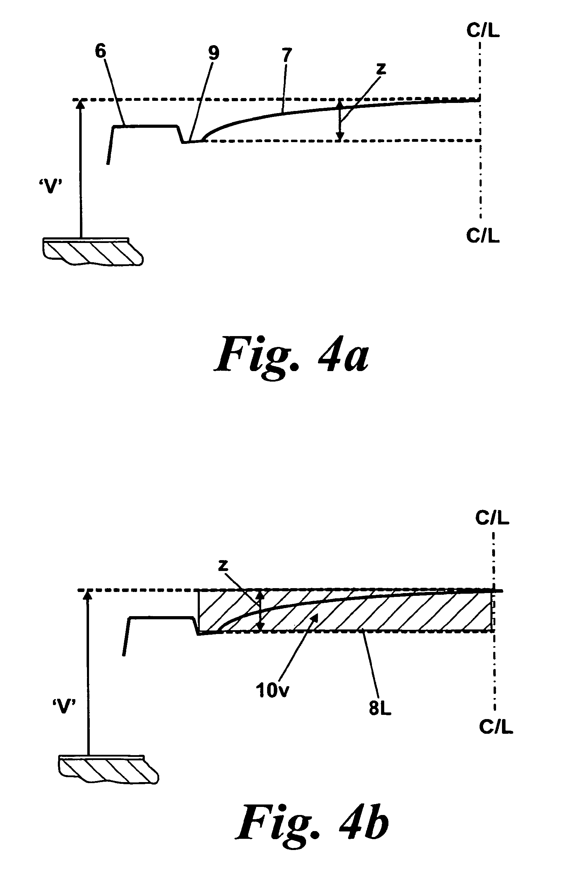

Referring now to Figs.4a and 4b the central roof portion 7 has a high point or crown located on the centre line C/L of the motor vehicle 1 and, in this case, this is also the highest point of the vehicle 1 and so defines the overall height 'V' of the vehicle 1. It will however be appreciated that with some roof forms the height of the ridges 6 may determine the overall height of the vehicle 1.

In the case where the high point is determined by the height of the ridges 6, there will be a difference in height between the high point of the central roof portion 7 and the highest point of the vehicle 1 and this difference in height may be sufficient in some case to package a stowed roof bar in accordance with this invention. However, in most cases, this difference will not be sufficient to permit a stowed roof bar to be stowed without increasing the vehicle height.

If, as shown, the ridges 6 are lower than the overall height 'V' of the vehicle as determined by the high point of the central roof portion 7 a number of the channels 8 must be formed in the central roof portion 7 so as to provide sufficient volume in which to stow each roof bar 10 so that, when the roof bars 10 fitted to the roof of the vehicle 1 are moved to their respective stowed states, no part of the stowed roof bars 1 is located higher than the high point of the roof 5 so that the overall height 'V' of the vehicle 1 is not increased by the stowed roof bars 10. Such channels could also be used even if the high point is the ridges to provide an increased volume for stowing the roof bar 10.

The roof 5 has a low point corresponding to a height below which a surface is not self draining and each roof bar 10 must be stowed on a surface that is no lower than the low point of the roof 5 so that the surface is self draining and to reduce drag, wind noise and improve the aesthetic appearance of the vehicle.

As the low point of the roof 5 corresponds to the height of the drainage ditches 9, each of the channels 8 must have a base surface 8b located no lower than the height of the drainage ditches 9 so as to ensure that the channels 8 are self draining.

In Figs.4a and 4b the dimension z represents the vertical height between the level of the drainage ditches 9 and the high point of the roof 5 and it is this space that can be utilised by incorporating the channels 8 into the roof 5 to stow a roof bar 10. Fig.4b shows as a shaded area 10v the volume that can be occupied by a stowed roof bar 10 without increasing the overall height 'V' of the vehicle 1. The line 8L corresponds to the minimum height of the base surface 8b that must be maintained if the corresponding channel 8 is to be self draining.

Therefore although a roof bar formed in accordance with this invention can be used on many types of roof depending upon their respective configuration and is not limited to a roof having the profile shown, it is desirable for the roof 5 to have a number of open ended channels 8 because these can be used to assist with stowage of the roof bars 10 by providing an additional stowage volume.

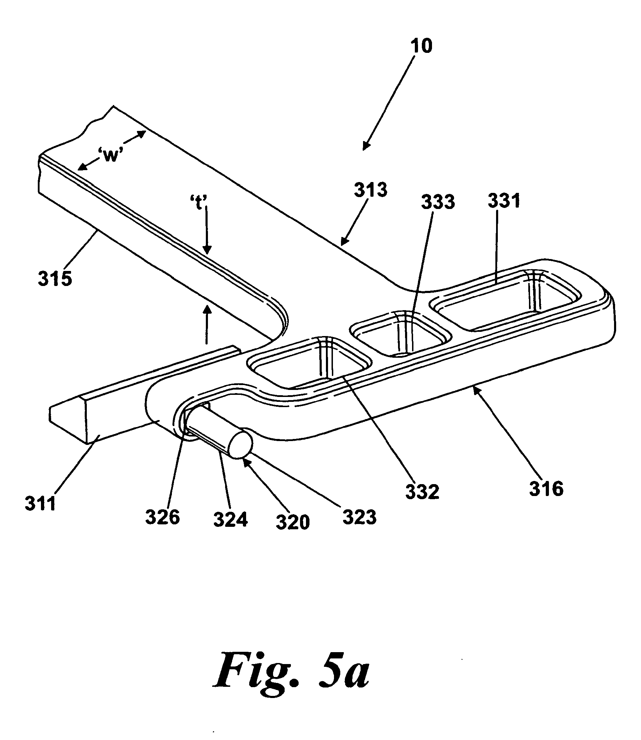

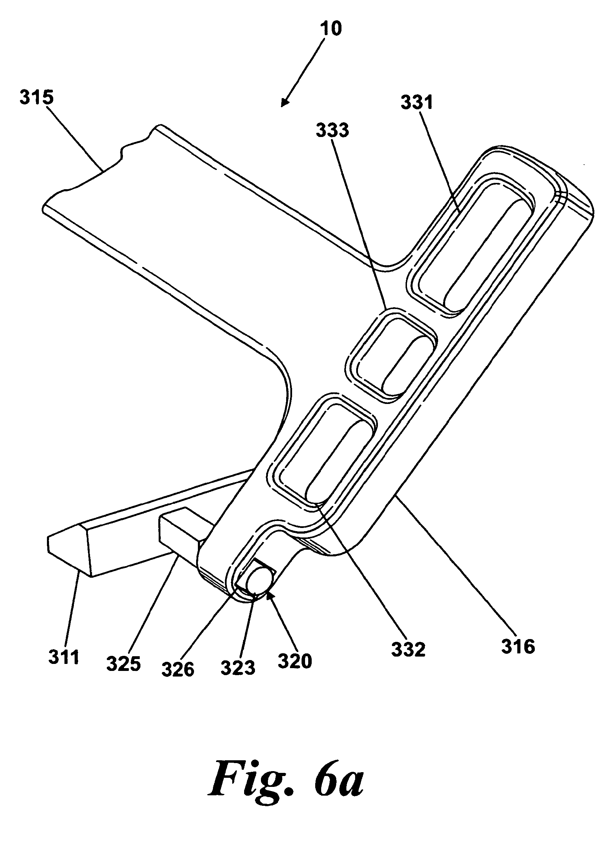

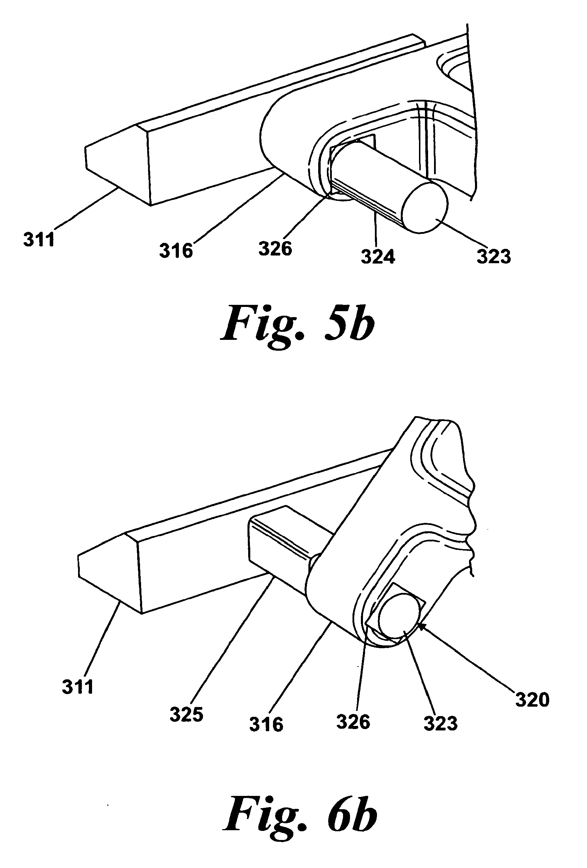

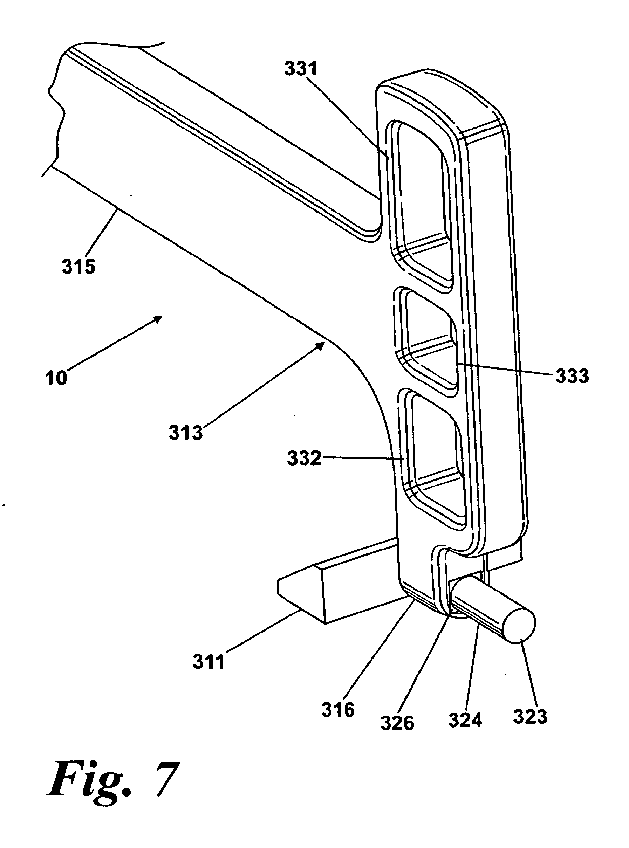

With reference to Figs 5a to 10 there is shown in greater detail the roof bar 10.

The roof bar 10 comprises an elongate load carrying member 313 pivotally connected to the roof of a vehicle such as the vehicle 1 so as to extend across the vehicle 1 and a latch mechanism 320 to selectively latch the elongate load carrying member 313 so as to hold the elongate load carrying member 313 in a deployed state in which a crossbar portion 315 of the elongate load carrying member 313 is spaced above the roof of the vehicle 1. As shown the motor vehicle is in the form of a van 1 and is shown with two roof bars fitted to its roof 5 but it will be appreciated that more than two roof bars could be fitted to the roof 5.

The elongate load carrying member 313 is H-shaped and comprises of the crossbar portion 315 and two end portions 316, one fastened to each end of the crossbar portion 315.

The end portions 316 are used to space the crossbar 315 above the roof when the roof bar 10 is in the deployed state and provide end stops for the crossbar 315 so as to prevent an item secured to the roof bar 10 from sliding off either end of the crossbar 315.

The cross-bar 315 is formed from a rectangular tube that is wide relative to its thickness so that, when the cross bar 315 is in the deployed state, the crossbar 315 is able to support a load fastened to the roof bar 10 but, when the roof bar 10 is stowed, the thickness of the crossbar 315 is such that the overall height of the vehicle 1 is not increased by the stowed roof bar 10. This asymmetric shape also has the advantage that the resistance to bending of the crossbar portion 315 is higher than it would be if the crossbar portion 315 was of the same width (w) as thickness (t) because of the increased second moment of area of the crossbar portion 315 when in the deployed position. The width (w) may for example be 1.5 to 4.0 times greater than the thickness (t) and the thickness may be in the range of 15 to 20 mm. Therefore the use of an asymmetrical shape provides a roof bar 10 able to support heavy loads while stowing in a relative small space above the roof 5.

Each of the end portions 316 is moulded from a plastic material and has a spigot (not shown) extending therefrom. The crossbar 315 has a bore shaped and sized to fit the spigots and the two end portions 316 are fastened to the crossbar 315 by means of the spigots by, in this case, adhesive bonding.

Each end portion 316 also has three large apertures 331, 332, 333 formed therein for securing a load to the roof bar 10 when the roof bar 10 is in use.

The roof bar 10 further comprises of a pair of base plates or brackets 311 which are used to fasten the elongate load carrying member 313 of the roof bar 10 to the roof of the vehicle 1. Each of the base plates 311 has one of the two end portions 316 pivotally connected to it by means of a peg 323. Each of the pegs 323 has a round portion 324 that acts as a guide means during transit of the elongate load carrying member 313 between the stowed and deployed states and a polygonal portion 325 for latching the elongate load carrying member 313 in the stowed and deployed positions. The polygonal portion 325 has an even number of sides and, in this case, has four sides so that the polygonal portion is a square member 324. It will however be appreciated that, provided that a predetermined or indexed rotation of substantially 90 degrees is obtainable, a different number of sides could be used on the peg 323.

Each elongate load carrying member 313 has a complimentary polygonal aperture formed therein which in this case is a square aperture 326. It will however be appreciated that a different number of sides could be used for the aperture 326 provided that the predetermined or indexed rotation is obtainable in conjunction with the cooperating peg 323.

It will be appreciated that there is aperture 326 in both of the end portions 316 and that two pegs 323 are provided, one for co-operation with each peg 323. It will also be appreciated that both of the pegs 323 extend in the same direction away from their respective base plates 311.

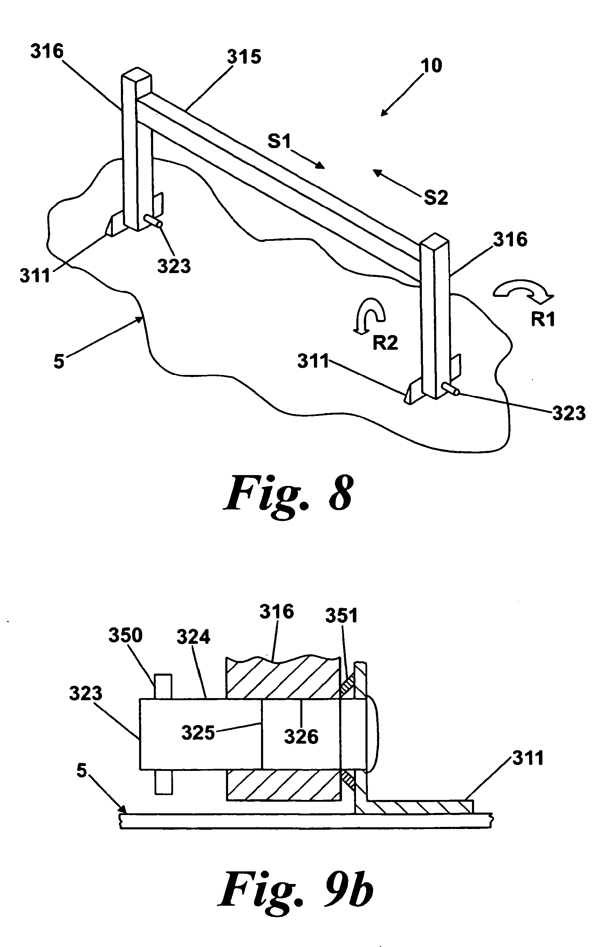

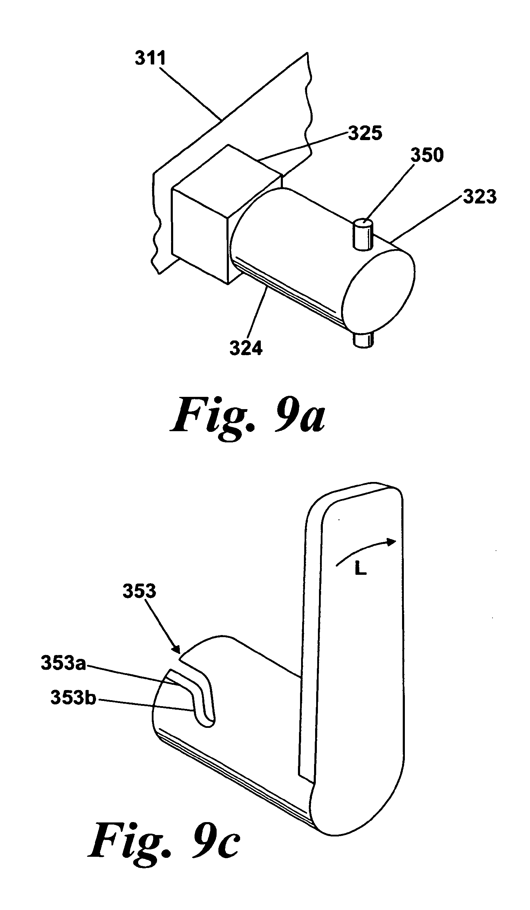

A locking means (shown in Figs. 9a to 10) is used to lock one of the end portions 316 in at least the deployed position so as to prevent it from disengaging from the square portion 325 of the peg 323 if a side load is applied to the load carrying elongate member 313 of the roof bar 10 by a load carried thereon. The locking means may also be used to lock the end portions 316 in the stowed position.

The locking means comprises in this case of a pin 350 press fitted in an aperture in the round portion 324 of one of the pegs 323. A spring in the form of a bellville washer 351 is provided to bias the end portion 316 away from the base plate 311 and a quarter turn handle 352 is provided for engagement with the pin 350.

The quarter turn handle 352 has a pair of L-shaped slots 353 formed therein which engage with opposite ends of the pin 350. The L-shaped slots 353 have a first portion 353a aligned with a longitudinal axis of the peg 323 and a second portion 353b inclined relative to the longitudinal axis of the peg 323 so as to produce a clamping action when the handle 352 is rotated in the direction of the arrow "L" on Fig.10. As the handle 352 is drawn towards the base plate 311 the spring 351 is compressed and the respective end portion 316 is clamped between the handle 352 and the base plate 311 on the square portion 325 of the peg 323. In this case, only one locking means is used for the roof bar 10 because this permits the roof bar 10 to be stowed and deployed from one end.

It will be appreciated that the locking means shown is only one of many types that could be used and that with some types of locking means these may be used at both ends of the elongate load carrying member 313. However, if two locking means are used, it is preferable for these to be interconnected so that they can both be released from one side of the van 1.

The height of the stowed roof bar 10 is determined by the largest of the height of the base plates 311, the thickness of the end portions 316 of the roof bar 10 and the thickness of the crossbar portion 315. As discussed above, this dimension can be made as small as 15 to 20 mm without sacrificing the mechanical integrity of the roof bar 10 if an asymmetric crossbar portion 315 is used.

The base plates 311 can be secured in the drainage ditches 9 of the roof 5 and, when stowed, the crossbar 315 rests upon the lower surface 8b of one of the channels 8. However, it will be appreciated that the roof bar 10 could be fastened to the roof 5 so that it lies entirely within one of the channels 8 or if there are no channels directly to any convenient location on the roof 5.

In operation the roof bar 10 can be moved from its deployed position, in which an upper surface of the cross bar 315 is positioned approximately 100 to 200 mm above the adjacent central roof portion 7, to the stowed state, in which it is folded flat on the roof 5, by rotating the locking handle 352 so as to release the locking means holding the end portion 316 on the respective square portion 325 of the respective peg 323, axially displacing the elongate load carrying member 313 in the direction of the arrow "S1" on Fig.8 by pushing or pulling the elongate load carrying member 313 so as to disengage the square apertures 326 from the square portions 325 of the pegs 323, rotating the elongate load carrying member 313 in the direction of the arrow "R1" on Fig.8 using the round portions 324 of the pegs 323 as guides or bearings and one of the end portions 316 as a handle to its stowed position and then re-engaging the square apertures 326 in the end portions 316 with the square portions 325 of the pegs 323 by sliding it in the direction of arrow "S2" and then re-applying the locking handle 352 and rotating it to hold the end portion 316 in place.

To reverse the procedure, the locking handle 352 is removed, the elongate load carrying member 313 is pushed or pulled in the direction of arrow "S1" so as to disengage the square apertures 326 from the square portions 325 of the pegs 323, the elongate load carrying member 313 is then rotated in the direction of the arrow "R2" on Fig.8 using the round portions 324 of the pegs 323 as guides or bearings and one of the end portions 316 as a handle to its deployed position, the square apertures 326 in the end portions 316 are then re-engaged with the square portions 325 of the pegs 323 by sliding the roof bar 10 in the direction of the arrow "S2" on Fig.8 and finally the locking handle 352 is replaced to clamp the end portion 316 on the square portion 325 of the peg 323.

Although the invention has been described with respect to a specific embodiment having square pegs and square apertures it will be appreciated that it is not limited to such an embodiment.

The latch mechanism for example could comprise a first member having two surfaces corresponding to the stowed and deployed positions of the roof bar attached to one of the vehicle roof and the elongate load carrying member and a complimentary surface on the other of the vehicle roof and the elongate load carrying member for engagement with the two surfaces so as to secure the roof bar in at least a first position corresponding to the stowed state of the roof bar and a second position corresponding to a deployed state of the roof bar.

For example the latch mechanism could comprise a polygonal member having an even number of sides attached to one of the vehicle roof and the elongate load carrying member and a complimentary surface for engagement with one or more of the sides so as to secure the roof bar in at least a first position corresponding to the stowed state of the roof bar and a second position corresponding to a deployed state of the roof bar. The complimentary surface could be a surface on a clamping member that is engageable with the polygonal member, such as for example, a plate moveable into contact with one of the sides of the polygonal member and locked against the respective side by a rotary cam.

Similarly it will be appreciated the polygonal member could alternatively be attached to the elongate load carrying member and the complimentary surface could be one surface of a polygonal aperture formed in the bracket.

It will also be appreciated that instead of the polygonal member being a pair of pegs 323 each extending from a respective base plate or bracket 311, the polygonal member could be part of a single elongate member extending from a bracket 311 at one end of the elongate load carrying member 313 to a bracket 311 at the other end of the elongate load carrying member 313.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A stowable roof bar (10) for a motor vehicle (1) comprising an elongate load carrying member (313) pivotally connected to a roof (5) of the vehicle (1) so as to extend across the vehicle (1) and a latch mechanism to selectively hold the elongate load carrying member (313) in a deployed state in which a crossbar portion (315) of the elongate load carrying member (313) is spaced above the roof (5) of the vehicle (1) **characterised in that** the latch mechanism comprises a first member (323) having two surfaces corresponding to the stowed and deployed positions of the roof bar (10) attached to one of the vehicle roof (5) and the elongate load carrying member (313)and a complimentary surface (326) on the other of the vehicle roof (5) and the elongate load carrying member (313) for engagement with one of the two surfaces so as to secure the roof bar (10) in a first position corresponding to the stowed state of the roof bar (10) and with the other of the two surfaces so as to secure the roof bar (10) in a second position corresponding to a deployed state of the roof bar (10).

2. A roof bar (10) as claimed in claim 1 wherein the first member is a polygonal member (323) having an even number of sides attached to one of the vehicle roof (5) and the elongate load carrying member (313) and a complimentary surface (326) on the other of the vehicle roof (5) and the elongate load carrying member (313) for engagement with one or more of the sides so as to secure the roof bar (10) in at least the first position corresponding to the stowed state of the roof bar (10) and the second position corresponding to the deployed state of the roof bar.

3. A roof bar as claimed in claim 2 wherein the polygonal member (323) is attached to one of a bracket (311) on the vehicle roof (5) and the elongate load carrying member (313) and the complimentary surface is one surface of a polygonal aperture (326) formed in one of the elongate load carrying member (313) and the bracket (311) wherein the polygonal aperture (326) is engageable with the polygonal member (323) in at least a first position corresponding to the stowed state of the roof bar (10) and a second position corresponding to a deployed state of the roof bar (10).

4. A roof bar as claimed in claim 3 wherein the polygonal member is a peg (323) extending from the bracket (311) and the elongate load carrying member (313) has the complimentary polygonal aperture (326) formed therein.

5. A roof bar as claimed in claim 4 wherein the elongate load carrying member (313) comprises a crossbar portion (315) which extends across the motor vehicle (1) and two end portions (316), one at each end of the crossbar portion (315), and the aperture (326) is formed in at least one of the two end portions (316).

6. A roof bar as claimed in claim 5 wherein there is aperture in both of the end portions (316) and two pegs (323) are provided, one for co-operation with each peg (323), both of the pegs (323) extending in the same direction away from their respective brackets (311).

7. A roof bar as claimed in any of claims 4 to 6 wherein each peg (323) has a round portion (324) that acts as a guide means during transit between the stowed and deployed states and a polygonal portion (325) for latching the elongate load carrying member (313) in the stowed and deployed positions.

8. A roof bar as claimed in any of claims 2 to 7 wherein the polygonal aperture is a square aperture (326).

9. A roof bar as claimed in any of claims 2 to 8 wherein the polygonal member is a square member (325).

10. A roof bar as claimed in claim 2 wherein the complimentary surface is a surface on a clamping member that is engageable with the polygonal member.

11. A roof bar as claimed in any of claims 1 to 10 in which the roof (5) of the motor vehicle (1) has a high point and a low point and the roof bar (10) is fitted so as to be stowable in a open ended transverse channel (8) in the roof (5) of the vehicle (1) wherein the thickness of the components (311, 315, 316) forming the roof bar (10) are such that, when the roof bar (10) is moved to a stowed state, no part of the stowed roof bar (10) is located below the low point of the roof (5) and above the high point of the roof (5).

12. A motor vehicle (1) having a roof and at least two roof bars (10) as claimed in any of claims 1 to 11 attached to a roof (5) of the motor vehicle (1) in a spaced apart relationship.

13. A motor vehicle as claimed in claim 12 wherein the roof (5) of the motor vehicle (1) has a high point and a low point corresponding to a height below which a surface is not self draining and a number of transverse open ended channels (8) each sized to accommodate a stowed roof bar (10), each of the channels (8) having a base surface (8b) located no lower than the low point of the roof (5) such that, when each roof bar (10) fitted to the roof (5) of the vehicle (1) is moved to its respective stowed state, no part of the stowed roof bar (10) is located higher than the high point of the roof (5) so that the overall height of the motor vehicle (1) is not increased by the stowed roof bars (10) and no part of each roof bar (10) is located lower than the low point of the roof (5).

14. A motor vehicle as claimed in claim 13 wherein the roof has a convex central portion (7) bounded on each side by a longitudinally extending drainage ditch (9) and the low point of the roof (5) corresponds to the height of the drainage ditches (9).

15. A motor vehicle as claimed in claim 14 wherein each of the channels (8) has a base surface (8b) located no lower than the height of the drainage ditches (9) so as to ensure that it is self draining.

## Patentansprüche

1. Verstaubare Dachstrebe (10) für ein Kraftfahrzeug (1) mit einem länglichen Lastaufnahmeelement (313), das schwenkbar mit einem Dach (5) des Fahrzeugs (1) verbunden ist, so dass es sich über das Fahrzeug (1) erstreckt, und einem Verriegelungsmechanismus, um das längliche Lastaufnahmeelement (313) gezielt in einem eingesetzten Zustand zu halten, in dem ein Querträgerabschnitt (315) des länglichen Lastaufnahmeelements (313) über dem Dach (5) des Fahrzeugs (1) beabstandet ist, **dadurch gekennzeichnet, dass** der Verriegelungsmechanismus ein erstes Element (323) mit zwei Flächen, die der verstauten und der eingesetzten Position der Dachstrebe (10) entsprechen und am Fahrzeugdach (5) oder an dem länglichen Lastaufnahmeelement (313) angebracht sind, und eine komplementäre Fläche (326) am jeweils anderen des Fahrzeugdachs (5) oder länglichen Lastaufnahmeelements (313) zur Ineingriffnahme einer der beiden Flächen umfasst, um die Dachstrebe (10) in einer ersten Position, die dem verstauten Zustand der Dachstrebe (10) entspricht, zu befestigen, und der anderen der beiden Flächen, um die Dachstrebe (10) in einer zweiten Position, die einem eingesetzten Zustand der Dachstrebe (10) entspricht, zu befestigen.

2. Dachstrebe (10) nach Anspruch 1, wobei das erste Element ein polygonales Element (323) ist, das eine gerade Anzahl von Seiten hat und am Fahrzeugdach (5) oder am länglichen Lastaufnahmeelement (313) angebracht ist, und eine komplementäre Fläche (326) am jeweils anderen des Fahrzeugdachs (5) oder länglichen Lastaufnahmeelements (313) zur Ineingriffnahme einer oder mehrerer der Seiten, um die Dachstrebe (10) in mindestens der ersten, dem verstauten Zustand der Dachstrebe (10) entsprechenden Position und der zweiten, dem eingesetzten Zustand der Dachstrebe entsprechenden Position zu befestigen.

3. Dachstrebe nach Anspruch 2, wobei das polygonale Element (323) an einer Halterung (311) am Fahrzeugdach (5) oder am länglichen Lastaufnahmeelement (313) angebracht ist und die komplementäre Fläche eine Fläche einer polygonalen Öffnung (326) ist, die im länglichen Lastaufnahmeelement (313) oder in der Halterung (311) ausgebildet ist, wobei die polygonale Öffnung (326) mit dem polygonalen Element (323) in mindestens einer ersten, dem verstauten Zustand der Dachstrebe (10) entsprechenden Position und einer zweiten, einem eingesetzten Zustand der Dachstrebe (10) entsprechenden Position in Eingriff bringbar ist.

4. Dachstrebe nach Anspruch 3, wobei das polygonale Element ein Stift (323) ist, der sich von der Halterung (311) erstreckt, und das längliche Lastaufnahmeelement (313) die komplementäre polygonale Öffnung (326) darin ausgebildet hat.

5. Dachstrebe nach Anspruch 4, wobei das längliche Lastaufnahmeelement (313) einen Querträgerabschnitt (315), der sich über das Kraftfahrzeug (1) erstreckt, und zwei Endabschnitte (316), einer an jedem Ende des Querträgerabschnitts (315), umfasst und wobei die Öffnung (326) in mindestens einem der beiden Endabschnitte (316) ausgebildet ist.

6. Dachstrebe nach Anspruch 5, wobei sich in beiden Endabschnitten (316) eine Öffnung befindet und zwei Stifte (323) vorgesehen sind, eine zum Zusammenwirken mit jedem Stift (323), wobei sich beide Stifte (323) in derselben Richtung weg von ihren jeweiligen Halterungen (311) erstrecken.

7. Dachstrebe nach einem der Ansprüche 4 bis 6, wobei jeder Stift (323) einen runden Abschnitt (324), der als Führungsmittel während des Übergangs zwischen dem verstauten und dem eingesetzten Zustand wirkt, und einen polygonalen Abschnitt (325) zum Verriegeln des länglichen Lastaufnahmeelements (313) in der verstauten und der eingesetzten Position hat.

8. Dachstrebe nach einem der Ansprüche 2 bis 7, wobei die polygonale Öffnung eine quadratische Öffnung (326) ist.

9. Dachstrebe nach einem der Ansprüche 2 bis 8, wobei das polygonale Element ein quadratisches Element (325) ist.

10. Dachstrebe nach Anspruch 2, wobei die komplementäre Fläche eine Fläche an einem Klemmelement ist, das mit dem polygonalen Element in Eingriff gebracht werden kann.

11. Dachstrebe nach einem der Ansprüche 1 bis 10, wobei das Dach (5) des Kraftfahrzeugs (1) eine hohe Stelle und eine tiefe Stelle hat und die Dachstrebe (10) so angebracht ist, dass sie in einem Querkanal (8) mit offenem Ende im Dach (5) des Fahrzeugs (1) verstaubar ist, wobei die die Dachstrebe (10) bildenden Komponenten (311, 315, 316) so dick sind, dass kein Teil der verstauten Dachstrebe (10) unterhalb der tiefen Stelle des Dachs (5) und oberhalb der hohen Stelle des Dachs (5) angeordnet ist, wenn die Dachstrebe (10) in einen verstauten Zustand bewegt wird.

12. Kraftfahrzeug (1) mit einem Dach und mindestens zwei Dachstreben (10) nach einem der Ansprüche 1 bis 11, die beabstandet an einem Dach (5) des Kraftfahrzeugs (1) angebracht sind.

13. Kraftfahrzeug nach Anspruch 12, wobei das Dach (5) des Kraftfahrzeugs (1) eine hohe Stelle und eine tiefe Stelle, die einer Höhe entspricht, unterhalb derer eine Fläche nicht automatisch abläuft, und mehrere Querkanäle (8) mit offenen Enden hat, die jeweils so bemessen sind, dass in ihnen eine verstaute Dachstrebe (10) untergebracht werden kann, wobei jeder der Kanäle (8) eine Basisfläche (8b) hat, die nicht tiefer als die tiefe Stelle des Dachs (5) angeordnet ist, so dass kein Teil der verstauten Dachstrebe (10), wenn jede am Dach (5) des Fahrzeugs (1) angebrachte Dachstrebe (10) in ihren jeweiligen verstauten Zustand bewegt worden ist, höher als die hohe Stelle des Dachs (5) angeordnet ist, so dass die Gesamthöhe des Kraftfahrzeugs (1) durch die verstauten Dachstreben (10) nicht zunimmt, und kein Teil jeder Dachstrebe (10) tiefer als die tiefe Stelle des Dachs (5) angeordnet ist.

14. Kraftfahrzeug nach Anspruch 13, wobei das Dach einen konvexen mittleren Abschnitt (7) hat, der auf jeder Seite von einem sich in Längsrichtung erstreckenden Ablaufgraben (9) begrenzt wird, und wobei die tiefe Stelle des Dachs (5) der Höhe der Ablaufgräben (9) entspricht.

15. Kraftfahrzeug nach Anspruch 14, wobei jeder der Kanäle (8) eine Basisfläche (8b) hat, die nicht tiefer als die Höhe der Ablaufgräben (9) angeordnet ist, um sicherzustellen, dass das Ablaufen automatisch erfolgt.

## Revendications

1. Barre de toit (10) pouvant être rangée, pour un véhicule automobile (1), comprenant un organe porte-charge allongé (313) connecté de manière pivotante à un toit (5) du véhicule (1) de manière à s'étendre en travers du véhicule (1) et un mécanisme d'accrochage pour retenir de manière sélective l'organe porte-charge allongé (313) dans un état déployé dans lequel une portion de traverse (315) de l'organe porte-charge allongé (313) est espacée au-dessus du toit (5) du véhicule (1), **caractérisée en ce que** le mécanisme d'accrochage comprend un premier organe (323) ayant deux surfaces correspondant aux positions rangée et déployée de la barre de toit (10) attachée sur l'un du toit du véhicule (5) ou de l'organe porte-charge allongé (313) et une surface complémentaire (326) sur l'autre du toit du véhicule (5) ou de l'organe porte-charge allongé (313), pour s'engager avec l'une des deux surfaces de manière à fixer la barre de toit (10) dans une première position correspondant à l'état rangé de la barre de toit (10) et avec l'autre des deux surfaces de manière à fixer la barre de toit (10) dans une deuxième position correspondant à un état déployé de la barre de toit (10).

2. Barre de toit (10) selon la revendication 1, dans laquelle le premier organe est un organe polygonal (323) ayant un nombre de côtés pair attaché à l'un du toit du véhicule (5) et de l'organe porte-charge allongé (313) et une surface complémentaire (326) sur l'autre du toit du véhicule (5) et de l'organe porte-charge allongé (313), pour s'engager avec un ou plusieurs des côtés de manière à fixer la barre de toit (10) dans au moins la première position correspondant à l'état rangé de la barre de toit (10) et la deuxième position correspondant à l'état déployé de la barre de toit.

3. Barre de toit selon la revendication 2, dans laquelle l'organe polygonal (323) est attaché à l'un d'une console (311) sur le toit du véhicule (5) et de l'organe porte-charge allongé (313) et la surface complémentaire est une surface d'une ouverture polygonale (326) formée dans l'un de l'organe porte-charge allongé (313) et de la console (311), l'ouverture polygonale (326) pouvant s'engager avec l'organe polygonal (323) dans au moins une première position correspondant à l'état rangé de la barre de toit (10) et une deuxième position correspondant à un état déployé de la barre de toit (10).

4. Barre de toit selon la revendication 3, dans laquelle l'organe polygonal est un tenon (323) s'étendant depuis la console (311) et l'ouverture polygonale complémentaire (326) est formée dans l'organe porte-charge allongé (313).

5. Barre de toit selon la revendication 4, dans laquelle l'organe porte-charge allongé (313) comprend une portion de traverse (315) qui s'étend en travers du véhicule automobile (1) et deux portions d'extrémité (316), une à chaque extrémité de la portion de traverse (315), et l'ouverture (326) est formée dans au moins l'une des deux portions d'extrémité (316).

6. Barre de toit selon la revendication 5, dans laquelle il est prévu une ouverture dans les deux portions d'extrémité (316) et deux tenons (323), chacune devant coopérer avec chaque tenon (323), les deux tenons (323) s'étendant dans la même direction à l'écart de leurs consoles respectives (311).

7. Barre de toit selon l'une quelconque des revendications 4 à 6, dans laquelle chaque tenon (323) a une portion ronde (324) qui agit comme moyen de guidage au cours du transit entre les états rangé et déployé et une portion polygonale (325) pour accrocher l'organe porte-charge allongé (313) dans les positions rangée et déployée.

8. Barre de toit selon l'une quelconque des revendications 2 à 7, dans laquelle l'ouverture polygonale est une ouverture carrée (326).

9. Barre de toit selon l'une quelconque des revendications 2 à 8, dans laquelle l'organe polygonal est un organe carré (325).

10. Barre de toit selon la revendication 2, dans laquelle la surface complémentaire est une surface sur un organe de serrage qui peut s'engager avec l'organe polygonal.

11. Barre de toit selon l'une quelconque des revendications 1 à 10, dans laquelle le toit (5) du véhicule automobile (1) a un point supérieur et un point inférieur et la barre de toit (10) est ajustée de manière à pouvoir être rangée dans un canal transversal à extrémité ouverte (8) dans le toit (5) du véhicule (1), l'épaisseur des composants (311, 315, 316) formant la barre de toit (10) étant telle que lorsque la barre de toit (10) est déplacée dans un état rangé, aucune partie de la barre de toit rangée (10) ne soit située sous le point inférieur du toit (5) et au-dessus du point supérieur du toit (5).

12. Véhicule automobile (1) ayant un toit et au moins deux barres de toit (10) selon l'une quelconque des revendications 1 à 11, attachées à un toit (5) du véhicule automobile (1), dans une relation espacée.

13. Véhicule automobile selon la revendication 12, dans lequel le toit (5) du véhicule automobile (1) a un point supérieur et un point inférieur correspondant à une hauteur en dessous de laquelle une surface n'est pas auto-drainante et un certain nombre de canaux transversaux à extrémités ouvertes (8), chacun étant dimensionné de manière à recevoir une barre de toit rangée (10), chacun des canaux (8) ayant une surface de base (8b) située pas plus bas que le point inférieur du toit (5), de telle sorte que lorsque chaque barre de toit (10) ajustée sur le toit (5) du véhicule (1) est déplacée dans son état rangé respectif, aucune partie de la barre de toit rangée (10) ne soit située plus haut que le point supérieur du toit (5) de sorte que la hauteur globale du véhicule automobile (1) ne soit pas augmentée par les barres de toit rangées (10) et qu'aucune partie de chaque barre de toit (10) ne soit située plus bas que le point inférieur du toit (5).

14. Véhicule automobile selon la revendication 13, dans lequel le toit a une portion centrale convexe (7) bordée de chaque côté par un drain (9) s'étendant longitudinalement et le point inférieur du toit (5) correspond à la hauteur des drains (9).

15. Véhicule automobile selon la revendication 14, dans lequel chacun des canaux (8) a une surface de base (8b) située pas plus bas que la hauteur des drains (9) de manière à s'assurer qu'il soit auto-drainant.
